(19) Europäisches Patentamt
European Patent Office
Office européen des brevets

(11) **EP 3 139 431 A1**

(12) **EUROPEAN PATENT APPLICATION**
published in accordance with Art. 153(4) EPC

(43) Date of publication:
**08.03.2017 Bulletin 2017/10**

(51) Int Cl.:
**H01M 8/02** *(2016.01)*    **H01M 8/10** *(2016.01)*

(21) Application number: **15810213.7**

(86) International application number:
**PCT/JP2015/065793**

(22) Date of filing: **01.06.2015**

(87) International publication number:
**WO 2015/194356 (23.12.2015 Gazette 2015/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **16.06.2014   JP 2014123505**

(71) Applicant: **Nippon Steel & Sumitomo Metal Corporation**
**Tokyo 100-8071 (JP)**

(72) Inventors:
• **IMAMURA, Junko**
  **Tokyo 100-8071 (JP)**
• **TOKUNO, Kiyonori**
  **Tokyo 100-8071 (JP)**
• **KAGAWA, Taku**
  **Tokyo 100-8071 (JP)**
• **KIMOTO, Masanari**
  **Tokyo 100-8071 (JP)**
• **MASAKI, Yasuhiro**
  **Tokyo 100-8071 (JP)**

(74) Representative: **Vossius & Partner**
**Patentanwälte Rechtsanwälte mbB**
**Siebertstrasse 3**
**81675 München (DE)**

(54) **TITANIUM MATERIAL FOR SEPARATOR OF POLYMER ELECTROLYTE FUEL CELL, SEPARATOR COMPRISING SAME, AND POLYMER ELECTROLYTE FUEL CELL EQUIPPED THEREWITH**

(57)    A titanium material comprises: a plate-like matrix made of titanium or a titanium alloy and having a rough surface on which minute protrusions are formed; a surface oxide coating film formed along the rough surface and containing one or more titanium oxides; and a tip covering formed on the surface oxide coating film in an area comprising a tip of the minute protrusion and containing one or more noble metals. A composition ratio of TiO $[I_{TiO}/(I_{Ti} + I_{TiO}) \times 100]$ determined from maximum intensity $I_{TiO}$ of diffraction peaks of TiO and maximum intensity $I_{Ti}$ of diffraction peaks of metal Ti in an X-ray diffraction intensity curve of the surface oxide coating film is more than or equal to 0.5%.

**FIG. 4**

**Description**

Technical Field

The present invention relates to a titanium material for a separator of a solid polymer fuel cell, a separator using the titanium material, and a solid polymer fuel cell comprising the separator.

Background Art

A fuel cell utilizes the energy generated in the binding reaction between hydrogen and oxygen, and is therefore a next-generation electricity generating system that is expected to be introduced and widely used in terms of both energy saving and environmental measures. There are various kinds of fuel cells such as a solid electrolyte type, a molten carbonate type, a phosphoric acid type, and a polymer electrolyte type.

Of these, the solid polymer fuel cell provides a high output density, is capable of being downsized, operates at a lower temperature than other types of fuel cells, and is easy to start and stop. From such advantages, the solid polymer fuel cell is expected to be used for automobiles and home-use small-sized cogeneration systems, and is particularly drawing attention these days.

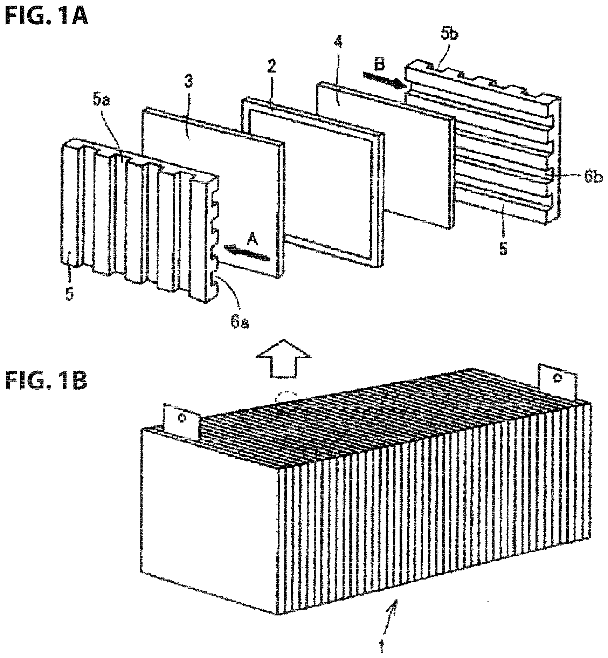

FIG. 1A and 1B are diagrams showing the structure of a solid polymer fuel cell (hereinafter, may simply be referred to as "fuel cell"); FIG. 1A is a disassembled perspective view of a single cell comprised in the fuel cell, and FIG. 1B is a perspective view of the whole of the fuel cell fabricated by combining a plurality of single cells.

As shown in FIG. 1A and 1B, a fuel cell 1 is an assembly (stack) of single cells. As shown in FIG. 1A, in the single cell, an anode-side gas diffusion electrode layer (also called "fuel electrode film"; hereinafter, referred to as "anode") 3 is stacked on one surface of a polymer electrolyte membrane 2, a cathode-side gas diffusion electrode layer (also called "oxidant electrode film"; hereinafter, referred to as "cathode") 4 is stacked on the other surface of the polymer electrolyte membrane 2, and separators (bipolar plates) 5a and 5b are stacked on both surfaces of the stacked structure, respectively.

Among fuel cells, there is one in which separators having a circulation path of cooling water are arranged between adjacent two single cells or at intervals of several single cells. The present invention deals also with a titanium material for a separator of such a water-cooled fuel cell.

As the polymer electrolyte membrane (hereinafter, simply referred to as "electrolyte membrane") 2, a fluorine-based proton-conducting membrane having a hydrogen ion (proton) exchange group is mainly used.

Both the anode 3 and the cathode 4 are formed mainly of a carbon sheet in which carbon fiber having electrical conductivity is processed in a sheet form (or carbon paper thinner than a carbon sheet, or even thinner carbon cloth). The anode 3 and the cathode 4 may be provided with a catalyst layer made of a particulate platinum catalyst, graphite powder, and as necessary a fluorine resin having a hydrogen ion (proton) exchange group. In this case, a fuel gas or an oxidizing gas and the catalyst layer come into contact, and the reaction is promoted.

In the separator 5a, groove-like passages 6a are formed on the surface on the anode 3 side. A fuel gas (hydrogen or a hydrogen-containing gas) A is passed through the passages 6a, and hydrogen is supplied to the anode 3. In the separator 5b, groove-like passages 6b are formed on the surface on the cathode 4 side. An oxidizing gas B such as air is passed through the passages 6b, and oxygen is supplied to the cathode 4. By the supply of these gases, an electrochemical reaction is produced, and direct current power is generated.

The principal functions required for the separator of a solid polymer fuel cell are as follows:

(1) a function as a "passage" of supplying the fuel gas or the oxidizing gas into the surface of the battery uniformly;
(2) a function as a "passage" of discharging the water generated on the cathode side, together with the carrier gas such as air or oxygen after reaction, from the fuel cell to the outside of the system efficiently;
(3) a function of being in contact with the electrode film (the anode 3 or the cathode 4) to form a passage of electricity and further serving as an electrical "connector" between adjacent two single cells;
(4) a function as a "diaphragm" between adjacent cells, i.e. between the anode chamber of a cell and the cathode chamber of an adjacent cell; and
(5) in a water-cooled fuel cell, a function as a "diaphragm" between a cooling water passage and an adjacent cell.

The matrix material of the separator used for a solid polymer fuel cell (hereinafter, simply referred to as "separator") needs to be one that can achieve such functions. The matrix material is roughly categorized into metal-based materials and carbon-based materials.

A separator made of a carbon-based material is produced by a method, in which a graphite substrate is impregnated with a thermosetting resin such as a phenol-based resin or a furan-based resin and curing and firing are performed, a method, in which carbon powder is kneaded with a phenol resin, a furan resin, tar pitch, or the like, the resulting material is press-molded or injection-molded into a plate shape and firing is performed to produce glassy carbon, and the like. When a carbon-based material is used, there is an advantage that a lightweight separator is obtained, but there are a problem of having gas permeability and a problem of the mechanical strength being low.

As the metal-based material, titanium, stainless steel, carbon steel, and the like are used. A separator made of these metal-based materials is produced by press processing or the like. The metal-based material has, as characteristics proper to metal, advantages that processability is good, the thickness of the separator can be reduced, and the weight of the separator can be reduced; but the electrical conductivity may be reduced due to the oxidation of the metal surface. Hence, there is a problem in that the contact resistance between the separator made of a metal-based material and the gas diffusion layer may be increased. To address this problem, the following measures are proposed.

Patent Literature 1 proposes a process in which, in a separator matrix made of titanium, the passive coating film is removed from a surface to be in contact with the electrode and then the surface is plated with a noble metal(s) such as gold. However, in view of the fact that the solid polymer fuel cell is expected to be widely used as fuel cells for movable bodies and stationary fuel cells, the use of a noble metal(s) in a large amount has a problem from the viewpoints of economy and constraints on the amount of resources, and is not widespread.

Patent Literature 2 proposes a titanium alloy in which the increase in contact resistance is suppressed by pickling a titanium alloy containing one or two or more platinum group elements and concentrating the platinum group element(s) on the surface. Patent Literature 3 proposes a separator made of titanium in which a platinum group element(s) is concentrated on the surface by pickling and then heat treatment is performed in a low oxygen concentration atmosphere, an inert gas, or a reducing atmosphere for the purpose of improving the adhesiveness between the platinum group element(s) concentrated on the surface and the matrix. However, the separators each contain a platinum group element(s), and the number of steps during production is large; consequently, a large cost increase cannot be avoided.

Hence, Patent Literature 4 proposes, as an attempt to solve the problem mentioned above without using a noble metal, a method in which, for a metal separator with a surface made of titanium, an electrically conductive contact layer made of carbon is formed on the surface by vapor deposition. However, usually a titanium oxide layer not having electrical conductivity is formed on the surface of titanium, and the contact resistance is not reduced even when an electrically conductive contact layer is formed. To reduce the contact resistance, it is necessary to form an electrically conductive contact layer immediately after the titanium oxide layer mentioned above is removed, and a large cost increase cannot be avoided.

Patent Literature 5 proposes a method in which an electrically conductive ceramic is dispersed on the surface of a separator to reduce the contact resistance. However, in this method, when the resulting material is press-molded from the plate material to the shape of a separator, the dispersed ceramic inhibits the molding, and occasionally cracking occurs or through-holes are formed in the separator during processing. Furthermore, the ceramic wears out the press mold, and consequently a problem arises that the press mold needs to be changed to one made of an expensive material, such as a cemented carbide material. Hence, the method of Patent Literature 5 has not yet been practically used.

The contact resistance between the separator and the gas diffusion layer is increased also by a fluoride being formed on the surface of the separator. In the fuel cell, fluoride ions are produced from the electrolyte membrane 2, and on the other hand water is produced by the reaction of the fuel cell. Thereby, hydrogen fluoride water is produced; and when a voltage is applied between the electrolyte membrane 2 and the separators 5a and 5b, a fluoride is formed on the surface of the separator.

Patent Literature 6 discloses a process in which the surface of a matrix made of titanium or a titanium alloy is electroplated with a noble metal element(s) and then heat treatment of 300 to 800°C is performed to make thin or eliminate the passive coating film existing between the matrix and the plating layer. However, a large amount of a noble metal element(s) is needed to form the noble metal plating layer, and a cost increase is caused.

Citation List

Patent Literature

Patent Literature 1: JP 2003-105523A

Patent Literature 2: JP 2006-190643A

Patent Literature 3: JP 4032068B

Patent Literature 4: JP 4367062B

Patent Literature 5: JP H11-162479A

Patent Literature 6: JP 2008-108490A

Non-Patent Literature

Non-Patent Literature 1: "TITANIUM JAPAN" vol. 54, No. 4, p. 259

Summary of Invention

Technical Problem

An object of the present invention is to provide a titanium material for a solid polymer fuel cell separator that solves the problems described above of the conventional technologies, can maintain a low contact resistance to an electrode made of carbon fiber, and is inexpensive.

Another object of the present invention is to provide a separator of a solid polymer fuel cell that can maintain a low contact resistance to an electrode made of carbon fiber and is inexpensive.

Still another object of the present invention is to provide a solid polymer fuel cell that has good initial electricity generation performance, is less likely to deteriorate in electricity generation performance, and is inexpensive.

Solution to Problem

The gist of the present invention is the titanium material of (A) below, the separator of (B) below, and the solid polymer fuel cell of (C) below.

(A) A titanium material for a separator of a solid polymer fuel cell,
the titanium material comprising:

a plate-like matrix made of titanium or a titanium alloy and having a rough surface on which minute protrusions are formed;
a surface oxide coating film formed along the rough surface and containing one or more titanium oxides; and
a tip covering formed on the surface oxide coating film in an area corresponding to a tip of the minute protrusion and containing one or more noble metals,
wherein a composition ratio of TiO [$I_{TiO}/(I_{Ti} + I_{TiO}) \times 100$] determined from maximum intensity $I_{TiO}$ of diffraction peaks of TiO and maximum intensity $I_{Ti}$ of diffraction peaks of metal Ti in an X-ray diffraction intensity curve of the surface oxide coating film is more than or equal to 0.5%.

(B) A separator, comprising the titanium material according to (A).
(C) A solid polymer fuel cell, comprising the separator according to (B).

A surface roughness RSm of the rough surface is preferably 0.5 to 5.0 μm.

An angle θ of the tip of the minute protrusion is preferably less than or equal to 60°.

The one or more noble metals contained in the tip covering is preferably one or two or more of Au, Pt, Pd, Ir, Rh, and Ru.

Advantageous Effects of Invention

In the titanium material, since the matrix is made of titanium or a titanium alloy, the surface oxide coating film is mainly titanium oxides. In the case where the surface oxide coating film is a natural oxide film, the coating film is mainly $TiO_2$. $TiO_2$ has practically no electrical conductivity. However, in the titanium material of the present invention, the surface oxide coating film contains TiO. The electric resistance of TiO is low. Therefore, when the titanium material of the invention of the present application is used for a separator of a solid polymer fuel cell, the electric resistance between the matrix of the titanium material and the anode and the cathode (electrodes each made of carbon fiber) can be reduced.

Furthermore, in the titanium material of the present invention, minute protrusions are formed on a rough surface, and a tip covering containing one or more noble metals is provided on the surface oxide coating film formed in an area comprising the tip of the minute protrusion. The contact resistance with the anode and the cathode can be reduced by the minute protrusions. Furthermore, since the noble metal(s) is less likely to be fluorinated, even when the titanium material is used as a separator of a solid polymer fuel cell for a long time, the contact resistance with the anode and the cathode is likely to be maintained at a low level by virtue of the tip coverings.

Therefore, a solid polymer fuel cell comprising the separator has good initial electricity generation performance, and is less likely to deteriorate in electricity generation performance.

The tip covering of the titanium material does not necessarily need to contain a platinum group element(s) as the noble metal(s), and may contain, for example, gold, which is less expensive than platinum group elements. The tip covering may be formed only on the surface oxide coating film provided in a tip portion of the minute protrusion; in this case, the amount of the noble metal(s) used can be significantly reduced. Therefore, the titanium material of the present invention can be prepared at low cost.

Brief Description of Drawings

[FIG. 1] FIG. 1 schematically shows a structure of a solid polymer fuel cell; FIG. 1A is a disassembled perspective view of a single cell comprised in the fuel cell, and
FIG. 1B is a perspective view of the whole of the fuel cell fabricated by combining a plurality of single cells.
[FIG. 2] FIG. 2 is a STEM image of a titanium material according to an example of the present invention.
[FIG. 3] FIG. 3 is a TEM image of the vicinity of a surface of a titanium material according to an example of the present invention.
[FIG. 4] FIG. 4 is a schematic cross-sectional view of the vicinity of a surface of a titanium material of the present invention.
[FIG. 5] FIG. 5 is a cross-sectional view illustrating the tip angle $\theta$ of a minute protrusion.
[FIG. 6] FIG. 6 is a diagram illustrating a method for measuring contact resistance.

Description of Embodiments

The present inventors prepared a titanium material that comprises a matrix made of titanium or a titanium alloy and a surface oxide coating film formed along the surface of the matrix and having electrical conductivity, and investigated a fuel cell that comprises separators made of the titanium material and carbon sheets made of carbon fiber in contact with the surfaces of the surface oxide coating films of the separators.

It is presumed that there is a very wide-ranging electrically conductive path between the matrix and the surface oxide coating film of the titanium material at least in the initial stage after the start of the use of the fuel cell. On the other hand, the diameter of the carbon fiber of the carbon sheet that forms the anode 3 and the cathode 4 is several micrometers, and therefore the contact with the surface of the surface oxide coating film is point contact or line contact. When the fuel cell is operated for a long time, a layer of a fluoride or the like not having electrical conductivity is produced on the surface of the surface oxide coating film due to corrosion etc. Consequently, the electrically conductive path between the surface oxide coating film and the carbon sheet is cut off, and the contact resistance with the carbon sheet increases gradually during the operation for a long time.

Thus, the present inventors have thought up an idea that the electrically conductive path between the surface oxide coating film having electrical conductivity and carbon fiber can be maintained by covering the surface of the surface oxide coating film with a noble metal(s). As described above, the titanium material of the present invention comprises a plate-like matrix made of titanium or a titanium alloy and having a rough surface on which minute protrusions are formed, a surface oxide coating film formed along the rough surface and containing one or more titanium oxides, and a tip covering formed on the surface oxide coating film in an area corresponding to the tip of the minute protrusion and containing one or more noble metals. The composition ratio of TiO $[I_{TiO}/(I_{Ti} + I_{TiO}) \times 100]$ determined from the maximum intensity $I_{TiO}$ of the diffraction peaks of TiO and the maximum intensity $I_{Ti}$ of the diffraction peaks of metal Ti in an X-ray diffraction intensity curve of the surface oxide coating film is more than or equal to 0.5%.

Here, the noble metal(s) refers to the metals of 8 elements of Au, Ag, Pt, Pd, Ir, Rh, Ru, and Os. However, Ag is oxidized when it is used as a part of a separator of a fuel cell, and deteriorates the performance of the fuel cell particularly when the fuel cell is operated for several thousand hours. Further, it is difficult to handle Os without producing an oxide. Thus, the noble metal(s) contained in the tip covering is preferably one or two or more of Au, Pt, Pd, Ir, Rh, and Ru.

Here, the matrix of the titanium material may be pure titanium of type 1, 2, 3, or 4 provided in JIS, or may be a titanium alloy. The surface oxide coating film may contain, in addition to the titanium oxide(s), an oxide of an impurity element contained in the titanium of the matrix, and may further contain, when the matrix is made of a titanium alloy, an oxide of an alloy element.

"The X-ray diffraction intensity curve of the surface oxide coating film" refers to an X-ray diffraction intensity curve that is obtained by performing X-ray diffraction measurement on a surface corresponding to the rough surface of the titanium material and reflects the structure of the surface oxide coating film and part of the matrix.

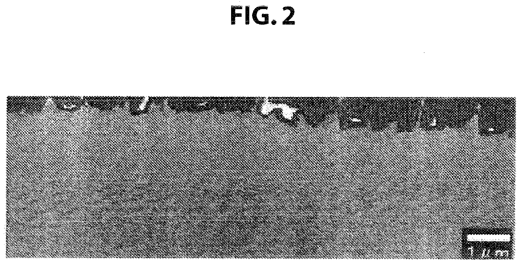

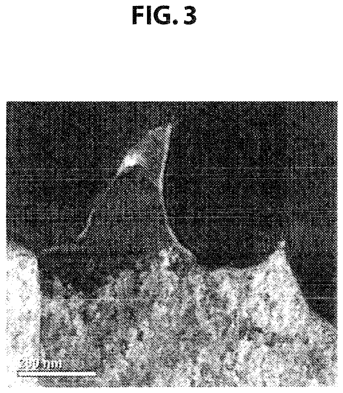

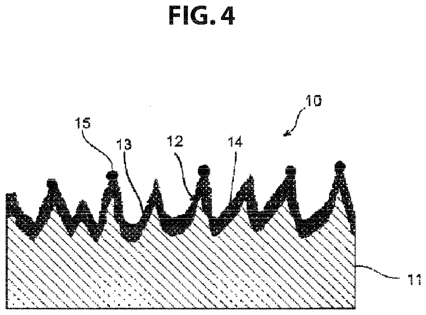

FIG. 2 is a scanning transmission electron microscope (STEM) image of a titanium material according to an example of the present invention, and FIG. 3 is a transmission electron microscope (TEM) image of the vicinity of the surface of a titanium material according to an example of the present invention. FIG. 4 is a schematic cross-sectional view of the vicinity of the surface of a titanium material of the present invention.

A titanium material 10 that is illustrated comprises a matrix 11 made of titanium or a titanium alloy. The matrix 11 is substantially in a plate shape, and has a rough surface 13 on which a plurality of minute protrusions 12 are formed densely. A surface oxide coating film 14 is formed along the rough surface 13 of the matrix 11. Therefore, the surface oxide coating film 14 has protrusions reflecting the shape of the minute protrusions 12. The surface oxide coating film 14 is mainly made of $TiO_2$, and contains TiO. A tip covering 15 containing one or more noble metals is provided on the surface oxide coating film 14 formed in an area corresponding to the tip of the minute protrusion 12.

During the photographing of the TEM image of FIG. 3, an element analysis was performed by energy dispersive X-ray spectrometry (EDS); and Ti and O were detected in an outer layer portion of the titanium material 10.

The thickness of the surface oxide coating film 14 is preferably more than or equal to 3 nm, and more preferably more than or equal to 4 nm. With such a thickness, sufficient durability of the surface oxide coating film 14 in the presence of fluoride ions is obtained. The thickness of the surface oxide coating film 14 is preferably less than or equal to 15 nm, more preferably less than or equal to 10 nm, and still more preferably less than or equal to 8 nm. With such a thickness, a low contact resistance with the anode and the cathode (electrodes each made of carbon fiber) is ensured in the use as a separator of a fuel cell.

The height of the protrusion of the surface oxide coating film 14 is 0.1 to 3 μm, for example, approximately 1.5 μm. Even if a layer not having electrical conductivity of a fluoride or the like is formed on the surface oxide coating film 14, an electrical contact with the anode and the cathode is easily obtained by virtue of such a protrusion. Furthermore, since noble metals are less likely to be fluorinated, by the tip covering 15 being provided on a tip portion of the protrusion of the surface oxide coating film 14, the contact resistance between the matrix 11 of the titanium material 10 and the anode and the cathode is likely to be maintained at a low level even when the titanium material 10 is used as a separator of a solid polymer fuel cell for a long time.

It is presumed that, in the titanium material 10 of the present invention, the contact resistance to carbon paper is reduced as compared to conventional titanium material not only by the surface oxide coating film 14 having electrical conductivity but also by the minute protrusion 12 and the tip covering 15 being provided. More specifically, it is presumed that, in the titanium material 10 of the present invention, the contact resistance is reduced also by the mechanisms described below.

That is, the contact electrical conductivity is presumed to be significantly improved by the following phenomena: the tip portions of the minute protrusions 12 are intertwined with carbon fibers, which are the other side of the contact, to form a special electromagnetic environment, and a state in which electrons and holes serving as carriers can permeate through the surface oxide coating film is created; the minute protrusion 12 is elastically deformed, and the surface oxide coating film 14 is made thin locally; the contact area with carbon fiber is increased; and the like.

Furthermore, the titanium material of the present invention has higher tolerance to a corrosive environment containing fluorine and/or an environment in which an electric potential is applied than conventional titanium material. Here, the "conventional titanium material" refers to a titanium material that comprises a matrix with practically no minute protrusions formed thereon and a surface oxide coating film with electrical conductivity formed on the surface of the matrix and in which practically no noble metal is provided on the surface oxide coating film.

An example of the measurement of the contact resistance of the titanium material of the present invention and the conventional titanium material in a corrosive environment containing fluorine and an environment in which an electric potential is applied will now be described. In the test (accelerated deterioration test), the same kind of carbon paper (TGP-H-120 manufactured by Toray Industries, Inc.) was used as the carbon paper in both cases. This is because the contact resistance varies with the kind of the carbon paper used. The initial resistance of the titanium material of the present invention is less than or equal to 10 mΩ·cm$^2$, and that of the conventional titanium material is, for example, approximately 50 to 1000 mΩ·cm$^2$.

When the conventional titanium material was kept in an aqueous environment containing fluorine at more than or equal to 2 ppm for 3 hours, the contact resistance with the carbon paper of the conventional titanium material increased with time, and became more than or equal to 100 mΩ·cm$^2$. On the other hand, when the titanium material of the present invention was kept in an aqueous environment containing fluorine at 2 to 5 ppm for 24 hours, the contact resistance with the carbon paper of the titanium material of the present invention was able to maintain 10 to less than or equal to 20 mΩ·cm$^2$. That is, the titanium material of the present invention exhibits high tolerance to a corrosive environment containing fluorine.

When an electric potential of 1.0 V (vs. the SHE) was applied between the titanium material and the carbon paper in a sulfuric acid aqueous solution at pH 3 for 24 hours, the contact resistance between the titanium material and the carbon paper was as follows. In the conventional titanium material, the contact resistance increased with time, and became more than or equal to 30 mΩ·cm$^2$; on the other hand, in the titanium material of the present invention, a contact resistance of 10 to less than or equal to 20 mΩ·cm$^2$ was able to be maintained. That is, the titanium material of the present invention exhibits high tolerance to an environment in which an electric potential is applied.

The surface roughness RSm of the rough surface 13 is preferably 0.5 to 5.0 μm. The surface roughness RSm refers to what is prescribed as "the average length of the profile elements" in JIS, and is an index of the average interval of the peaks and troughs of the concavities of convexities. The smaller the value of RSm is, the more densely concavities and convexities are distributed. For the rough surface 13 of the titanium material 10 of the present invention, the value of RSm serves as an index of the density of minute protrusions 12.

It is difficult to form a rough surface 13 having an RSm of less than 0.5 μm. If the RSm exceeds 5.0 μm, the initial contact resistance to carbon fiber is large (more than 10 mΩ·cm$^2$). The surface roughness RSm of the rough surface 13 is more preferably 2.0 to 4.0 μm. A rough surface 13 having a surface roughness RSm in this range can stably be formed.

The contact electrical conductivity to carbon paper depends also on the shape of the tip of the minute protrusion 12. According to the test result obtained by the present inventors, the angle of the tip of the minute protrusion 12 (hereinafter, may also be referred to as "tip angle") is preferably less than or equal to 60°. If the tip angle exceeds 60°, the initial contact resistance to carbon fiber is large (more than 10 mΩ·cm$^2$). The tip angle of the minute protrusion 12 is more preferably 20 to 60°. A rough surface 13 having a tip angle in this range can stably be formed.

To measure the tip angle, first, the titanium material is cut perpendicular to the surface of the matrix, and the resulting cross section is processed by cross section polishing (CP) or focused ion beam processing (FIB) to prepare a sample for cross section observation. Then, for the cross section of the sample, a cross-sectional image is photographed with a scanning electron microscope or a transmission electron microscope.

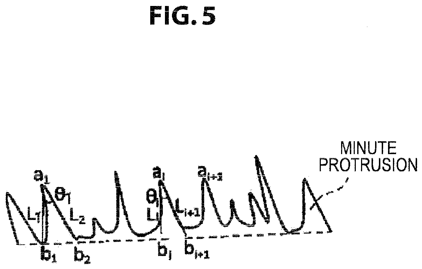

FIG. 5 is a cross-sectional view illustrating a tip angle 0 of a minute protrusion.

In the cross-sectional image mentioned above, for a convex vertex a1 and concave vertices b1 and b2 adjacent to both sides of the convex vertex a1, the angle between a straight line L1 connecting the convex vertex a1 and the concave vertex b1 and a straight line L2 connecting the convex vertex a1 and the concave vertex b2 is measured, and this is defined as a tip angle $\theta 1$. Similarly, the angle between a straight line Li connecting a convex vertex ai and a concave vertex bi and a straight line Li+1 connecting the convex vertex ai and a concave vertex bi+1 is measured, and this is defined as a tip angle $\theta i$; and the tip angle $\theta$ is determined by Formula (1) below.

[Math. 1]

$$\theta = \frac{1}{n} \sum_{i=1}^{n} \theta_i \qquad \cdots \cdots \cdots (1)$$

n may be more than or equal to 10.

<With regard to X-ray diffraction intensity>

In an X-ray diffraction intensity curve that is obtained by performing X-ray diffraction measurement on a surface corresponding to the rough surface 13 of the titanium material 10, $I_{TiO}/(I_{Ti} + I_{TiO}) \times 100$ (hereinafter, may also be referred to as "composition ratio of TiO") determined from the maximum intensity $I_{TiO}$ of the diffraction peaks of TiO and the maximum intensity $I_{Ti}$ of the diffraction peaks of metal Ti, that is, the proportion of $I_{TiO}$ to $(I_{Ti} + I_{TiO})$ is more than or equal to 0.5%. The diffraction peaks of TiO are presumed to be derived mainly from the TiO present in the surface oxide coating film 14. The diffraction peaks of metal Ti are presumed to be derived mainly from the metal Ti present in the matrix 11.

An example of the method of X-ray diffraction measurement and the method for identifying the diffraction peaks will now be described.

X-ray diffraction measurement is performed by oblique incidence in which the incident angle of X-ray is fixed to 0.3° with respect to the surface of the titanium material 10, while the angle of detection of the reflected (diffracted) X-ray is altered, and the diffraction peaks are identified in the obtained X-ray diffraction intensity curve.

SmartLab manufactured by Rigaku Corporation is used as the X-ray diffraction apparatus. Co-Kα (wavelength: $\lambda$ = 1.7902 A) is used as the X-ray used for measurement, and a W/Si multiple-layer film mirror (on the incident side) is placed on the incident side of a titanium material that is a sample and thereby Kβ is removed. The X-ray source load power (tube voltage/tube current) is set to 9.0 kW (45 kV/200 mA). The depth of X-ray entry in the measurement conditions mentioned above is approximately 0.18 μm for metal Ti and approximately 0.28 μm for the titanium oxide, and therefore the X-ray diffraction peaks reflect the structure of the area between the surface of the titanium material and a depth of approximately 0.2 to 0.3 μm from the surface.

X'pert HighScore Plus manufactured by Spectris Co., Ltd. is used as the analysis software application. Using the analysis software application, the X-ray diffraction intensity curve obtained by the measurement may be compared to a database of titanium oxides and metal titanium such as ICDD Card No. 01-078-2216, 98-002-1097, 01-072-6452, and 98-006-9970; thereby, the diffraction peaks can be identified.

<Relationship between X-ray diffraction intensity and electrical conductivity>

On the surface of titanium or a titanium alloy, usually a surface oxide coating film that is a passive coating film is formed. Such a surface oxide coating film usually exhibits insulating properties, and the contact resistance of titanium or a titanium alloy on which the coating film is formed is high. The present inventors have found that, by subjecting the surface of titanium or a titanium alloy to a prescribed treatment, the surface oxide coating film takes on electrical conductivity, and the contact resistance of the titanium or the titanium alloy can be reduced.

The electrical conductivity of titanium oxide is increased when the titanium oxide is deficient in oxygen with respect to the stoichiometric composition ($TiO_2$), as in TiO. Therefore, when TiO, which has a high electrical conductivity, is contained in the surface oxide coating film of titanium or a titanium alloy, the electrical conductivity of the surface oxide coating film is increased. The present inventors conducted extensive studies on the relationship between the X-ray diffraction intensity of a titanium oxide (TiO) in an X-ray diffraction intensity curve that is obtained by measuring an outer layer portion of a titanium material and the contact resistance.

As a result, it has been found that the titanium material exhibits a low contact resistance when $I_{TiO}/(I_{Ti} + I_{TiO}) \times 100 \geq 0.5\%$ is satisfied. $[I_{TiO}/(I_{Ti} + I_{TiO}) \times 100]$ is an index of the ratio of TiO contained in the outer layer portion of the titanium material; the larger the composition ratio of TiO is, the larger amount of TiO the surface oxide coating film contains.

In the case where the composition ratio of TiO is less than 0.5%, the electrical conductivity of the surface oxide coating film is not increased sufficiently. The composition ratio of TiO of the conventional titanium material, that is, a titanium material in which the surface oxide coating film is not subjected to a treatment for providing electrical conductivity, is almost 0%. In order to stably ensure the electrical conductivity of the surface oxide coating film, the composition ratio of TiO is preferably as high as possible, for example, is preferably set to more than or equal to 2.0%. It is presumed that a titanium oxide that is deficient in oxygen is present in addition to TiO in the surface oxide coating film, and both of these titanium oxides are in charge of the electrical conductivity in the thickness direction of the surface oxide coating film.

<Method for producing titanium material of the present invention>

The titanium material of the present invention can be produced by, for example, a production method comprising a step of forming minute protrusions on a surface of a matrix, a step of forming TiO in a surface oxide coating film of the surface on which the minute protrusions are formed and thereby providing electrical conductivity, and a step of supplying one or more noble metals to an area corresponding to a tip portion of the minute protrusion.

As the method for forming minute protrusions on the surface of the matrix (an oxide coating film may be formed on the surface), the surface of the titanium matrix after cleaning is treated in an aqueous solution containing fluoride ions. The treatment solution is, for example, a mixed aqueous solution containing 0.5 mass% of HF, 0.5 mass% of NaF, 0.5 mass% of NaCl, and 0.5 mass% of $HNO_3$. From the assessment by the present inventors, it has been revealed that minute protrusions can be formed on the surface of the matrix and the surface oxide coating film can be provided with electrical conductivity by treating the surface of the matrix at a treatment temperature of 30 to 40°C for a treatment time of 5 to 20 minutes with an aqueous solution in which the fluoride ion concentration is 0.05 to 1.5 mass% and concentrations of HF, NaF, NaCl, and $HNO_3$ are each in the range of 0.05 to 1.5 mass%.

After minute protrusions are formed on the surface of the matrix, the surface is electroplated with one or more noble metals. The noble metal(s) is deposited as plating preferentially on the tip portion of the protrusion of the surface of the titanium material. Thereby, the tip covering is formed.

In order to stabilize the surface oxide coating film of the titanium material in which minute protrusions are formed on the surface of the matrix, heat treatment in the temperature range of higher than or equal to 250°C and lower than 300°C for 1 to 15 minutes is performed. Thereby, the surface oxide coating film is densified and the mechanical strength of the coating film is enhanced, and furthermore tolerance in an environment in which fluoride ions are present or an environment in which a voltage is applied can be obtained. At temperatures lower than 250°C, the densification of the surface oxide coating film is less likely to be promoted; and in the temperature range of higher than or equal to 300°C, densification proceeds rapidly and it is difficult to perform control, and the oxide coating film having a large thickness is formed and the initial contact resistance is made high. The heat treatment described above may be performed before or after the electroplating of the noble metal(s) is performed; thereby, the advantageous effect is obtained.

[Examples]

To verify the effect of the present invention, samples of titanium material were prepared and evaluated by the following method.

1. Preparation of titanium materials

Titanium plates (foil), each of which was rolled to a thickness of 0.1 mm and was then subjected to annealing, were prepared. Groove-like gas passages with a width of 2 mm and a depth of 1 mm were formed on both surfaces (the anode side and the cathode side) of the titanium plate by press processing, and thereby a form capable of being used as a separator was obtained.

For all the titanium materials, the treatment of forming minute protrusions on the surface was performed by the method described above, and then the titanium materials were subjected to various surface treatments. In Table 1, the material used (the type of the titanium material as the matrix (the type prescribed in JIS H 4600)) and the performing or not-performing and the conditions of the surface treatments are shown.

[Table 1]

| Symbol | Type prescribed in JIS H 4600 | Electrical conductivity surface treatment | Plating element(s) | Heat treatment temperature (°C) | I₇₀/(I₇₃+I₇₀) ×100(%) | RSm(μm) | Tip angle θ (°) | Initial resistance (mΩ·cm²) | Resistance characteristics after electricity generation |
|---|---|---|---|---|---|---|---|---|---|
| Example 1 | 1 | Performed | Au | 250 | 0.5 | 2.8 | 37 | 3.5 | A |
| Example 2 | 2 | Performed | Au | 260 | 1.1 | 3 | 45 | 3.8 | A |
| Example 3 | 1 | Performed | Au | 230 | 3.8 | 2.1 | 29 | 3.3 | A |
| Example 4 | 1 | Performed | Pd | 270 | 4.1 | 2.7 | 50 | 3.6 | A |
| Example 5 | 2 | Performed | Pd | 230 | 1.2 | 3.1 | 43 | 3.5 | A |
| Example 6 | 15 | Performed | Pd | 250 | 0.6 | 4.1 | 55 | 3.6 | A |
| Example 7 | 1 | Performed | Pd | 290 | 3.1 | 3.3 | 28 | 3.5 | A |
| Example 8 | 1 | Performed | Ru | 250 | 0.8 | 3.2 | 31 | 4.0 | A |
| Example 9 | 2 | Performed | Ru | 230 | 3.7 | 2.7 | 40 | 4.1 | A |
| Example 10 | 16 | Performed | Ru | 290 | 3.6 | 2.1 | 26 | 4.3 | A |
| Example 11 | 17 | Performed | Ru | 250 | 0.7 | 2.5 | 63 | 4.0 | A |
| Example 12 | 1 | Performed | Ru | 270 | 0.9 | 3.7 | 29 | 4.3 | A |
| Example 13 | 2 | Performed | Ru | 290 | 2.8 | 3.9 | 32 | 4.0 | A |
| Example 14 | 1 | Performed | Ru | 270 | 2.4 | 5.5 | 38 | 4.5 | A |
| Example 15 | 1 | Performed | Au, Pd | 250 | 2.7 | 3.5 | 47 | 3.7 | A |
| Example 16 | 1 | Performed | Ag | 290 | 3.3 | 3.3 | 35 | 3.1 | A |
| Comparative Example 1 | 1 | Performed | Absent | 270 | 3.4 | 2.5 | 50 | 3.5 | B |
| Comparative Example 2 | 1 | Performed | Cu | 270 | 3.2 | 2.9 | 41 | 3.6 | B |
| Comparative Example 3 | 1 | Performed | Ru | 150 | 0.1 | 3.2 | 43 | 3.8 | B |
| Comparative Example 4 | 2 | Performed | Pd | 170 | 0.3 | 2.9 | 35 | 4.3 | B |
| Comparative Example 5 | 1 | Performed | Ru | 400 | 0 | 3.2 | 52 | 85 | - |
| Comparative Example 6 | 1 | Not performed | Absent | 600 | 0 | 5.9 | 85 | 500 | - |
| Comparative Example 7 | 1 | Not performed | Au | 230 | 0 | 6.8 | 123 | 3.4 | B |
| Comparative Example 8 | 1 | Not performed | Pd | 230 | 0 | 7.1 | 95 | 3.9 | B |
| Comparative Example 9 | 1 | Not performed | Ru | 230 | 0 | 6.7 | 110 | 3.4 | B |

Resistance characteristics after electricity generation

A: Less than 5 times the initial resistance

B: more than or equal to 5 times the initial resistance

-: Electricity generation test was not performed since the initial resistance was high.

Except for the titanium materials of Comparative Examples 6 to 9, the titanium material was, as the electrical conductivity surface treatment, treated with an aqueous solution at 30°C containing 0.5 mass% of HF, 0.5 mass% of NaF, 0.5 mass% of NaCl, and 0.5 mass% of $HNO_3$ for 10 minutes. Thereby, minute protrusions were formed on the surface of the matrix of the titanium material, and the surface oxide coating film was provided with electrical conductivity.

After that, except for the titanium materials of Comparative Examples 1 and 6, the surface of the titanium material was electroplated with one or two of Au, Pd, Ru, Ag, and Cu using a commercially available plating solution. Heat treatment of 150°C to 600°C was performed on the titanium material in an air furnace for 5 minutes in the following manner: for the titanium material of Comparative Example 1, the heat treatment was performed after the electrical conductivity surface treatment; for the titanium material of Comparative Example 6, the heat treatment was performed without performing a special surface treatment; and for the titanium materials other than these, the heat treatment was performed after the plating treatment mentioned above.

2. Evaluation of titanium material

2-1. With regard to plating

For the titanium material subjected to the plating treatment, atomic absorption spectroscopy was performed on a solution in which a certain amount of an outer layer portion of each titanium material was dissolved. As a result, the plating element(s) was detected for each titanium material. The mass of the element(s) per unit area upon viewing the surface of the titanium material perpendicularly was 3 to 10 $\mu g/cm^2$. That is, the amount of plating was very small, and the cost of the plating material is very small even when the element(s) is a noble metal(s).

For each titanium material, an outer layer portion was observed with a TEM. Further, by an EDS analyzer attached to the TEM, it has been found that a covering containing the plating element(s) was formed on the tip portion of the minute protrusion. It has been revealed that the plating element(s) was not distributed uniformly on the surface of the titanium material, but was concentrated on and around the tip of the minute protrusion.

2-2. Method for measuring contact resistance

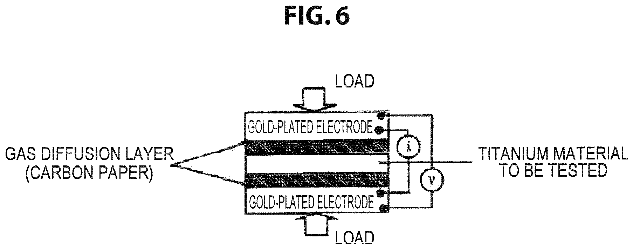

The contact resistance was measured in accordance with the method described in Non-Patent Literature 1 mentioned above, using the apparatus schematically shown in FIG. 6. Specifically, first, the prepared titanium material (hereinafter, referred to as "titanium separator") was sandwiched by sheets of carbon paper each having an area of 1 $cm^2$ (TGP-H-90 manufactured by Toray Industries, Inc.) that is used for the gas diffusion layer (the anode 3 and the cathode 4 of FIG. 1), and the resulting test piece was sandwiched by gold-plated electrodes.

Next, a load (10 kgf/cm$^2$) was applied to both ends of the gold-plated electrodes, in this state a certain current was passed between the electrodes, and the voltage drop between the carbon paper and the titanium separator generated at this time was measured; and the resistance value was determined based on the result. The obtained resistance value was the value of the sum of the contact resistances of both surfaces of the titanium separator; hence, the value was divided by 2 to obtain the contact resistance value of one surface of the titanium separator (the initial contact resistance).

Next, using the titanium separator of which the initial contact resistance had been measured, a solid polymer fuel cell of a single cell was fabricated. The reason why the form of a single cell was employed is that, in the state of multiple cells formed by stacking single cells, the condition of the stack is reflected in the evaluation result. A standard MEA for a PFEC (using Nafion 1135) manufactured by TOYO Corporation, FC50-MEA (membrane-electrode assembly (MEA)), was used as the polymer electrolyte membrane.

To the fuel cell, a 99.9999% hydrogen gas was passed as the gas for the anode-side fuel, and air was passed as the cathode-side gas. The pressure of the hydrogen gas and the air introduced into the fuel cell was set to 0.04 to 0.20 bar (4000 to 20000 Pa). The entire main body of the fuel cell was kept warm at 70 $\pm$ 2°C, and the humidity of the interior of the fuel cell was controlled by setting the entrance-side dew point to 70°C. The pressure of the interior of the battery was approximately 1 atmosphere.

The fuel cell was operated at a constant current density of 0.5 A/cm$^2$. The output voltage was highest during the period from 20 to 50 hours after the start of operation. The operation was continued for 500 hours after reaching the highest voltage, and then the contact resistance was measured by the method described above and was taken as the contact resistance after electricity generation operation.

A digital multimeter (KEITHLEY 2001, manufactured by TOYO Corporation) was used for the measurement of the contact resistance and the measurement of the current and voltage during the operation of the fuel cell.

Table 1 shows the initial contact resistance and the resistance characteristics after electricity generation.

All the titanium materials of Examples of the present invention are each a material in which the treatment of forming minute protrusions on the surface of the matrix and the electrical conductivity surface treatment were sequentially performed, the surface of the resulting titanium material was plated with Au, Pd, or Ru (Example 15 was plated with Au and Pd), and heat treatment was performed at higher than or equal to 250°C and lower than 300°C. In all these titanium materials, the initial resistance and the resistance after electricity generation were low. On the other hand, in the titanium materials of Comparative Examples, not all the necessary conditions of the titanium materials of Examples were satisfied; and the initial resistance was high, or the resistance after electricity generation was as high as more than or equal to 5 times the initial resistance.

Comparative Example 1 is a titanium material in which plating was not performed. Comparative Example 2 is a titanium material plated with Cu in place of the noble metal(s). It is presumed that, since a noble metal was not present on the tip portion of the minute protrusion, these titanium materials were not able to maintain the contact resistance between the tip portion of the minute protrusion and the carbon paper at a low level during electricity generation.

All of Comparative Examples 3 to 5 are each a material in which the electrical conductivity surface treatment was performed, but $I_{TiO}/(I_{Ti} + I_{TiO}) \times 100$ was less than 0.5% in the resulting titanium material. In Comparative Examples 3 and 4, it is presumed that, since the heat treatment temperature was as low as 150°C and 170°C, respectively, crystalline TiO was not formed sufficiently. The heat treatment temperatures of Comparative Examples 5 and 6 were 400°C and 600°C, respectively. The high initial resistances in the titanium materials of Comparative Examples 5 and 6 are presumed to be because the surface oxide coating film was made thick due to the heat treatment. In the titanium materials of Comparative Examples 6 to 9, it is presumed that the fact that the electrical conductivity surface treatment was not performed contributes to the poor initial resistance or the poor resistance characteristics after electricity generation.

Industrial Applicability

The titanium material of the present invention can be used for a separator of a solid polymer fuel cell. The separator of the present invention can be used for a solid polymer fuel cell.

Reference Signs List

| 5a, 5b | separator |
| 10 | titanium material |
| 11 | matrix |
| 12 | minute protrusion |
| 13 | rough surface |
| 14 | surface oxide coating film |
| 15 | tip covering |

**Claims**

1. A titanium material for a separator of a solid polymer fuel cell,
   the titanium material comprising:

   a plate-like matrix made of titanium or a titanium alloy and having a rough surface on which minute protrusions are formed;
   a surface oxide coating film formed along the rough surface and containing one or more titanium oxides; and
   a tip covering formed on the surface oxide coating film in an area corresponding to a tip of the minute protrusion and containing one or more noble metals,
   wherein a composition ratio of TiO $[I_{TiO}/(I_{Ti} + I_{TiO}) \times 100]$ determined from maximum intensity $I_{TiO}$ of diffraction peaks of TiO and maximum intensity $I_{Ti}$ of diffraction peaks of metal Ti in an X-ray diffraction intensity curve of the surface oxide coating film is more than or equal to 0.5%.

2. The titanium material according to claim 1,
   wherein a surface roughness RSm of the rough surface is 0.5 to 5.0 $\mu$m.

3. The titanium material according to claim 1 or 2,
   wherein an angle of the tip of the minute protrusion is less than or equal to 60°.

4. The titanium material according to any one of claims 1 to 3,
   wherein the one or more noble metals contained in the tip covering is one or two or more of Au, Pt, Pd, Ir, Rh, and Ru.

5. A separator of a solid polymer fuel cell,
   the separator comprising the titanium material according to any one of claims 1 to 4.

**6.** A solid polymer fuel cell, comprising the separator according to claim 5.

**FIG. 1A**

**FIG. 1B**

# FIG. 2

FIG. 3

# FIG. 4

## FIG. 5

# FIG. 6

LOAD

GOLD-PLATED ELECTRODE

GAS DIFFUSION LAYER
(CARBON PAPER)

TITANIUM MATERIAL
TO BE TESTED

GOLD-PLATED ELECTRODE

LOAD

## INTERNATIONAL SEARCH REPORT

| International application No. |
|---|
| PCT/JP2015/065793 |

A. CLASSIFICATION OF SUBJECT MATTER
*H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/02, H01M8/10

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2010/038544 A1 (Nippon Steel Corp.), 08 April 2010 (08.04.2010), claim 3; page 16, line 19 to page 17, line 1; page 24, line 12 to page 26, line 5; tables 1-1, 1-2 & EP 2337135 A1 claim 3; paragraphs [0041], [0067] to [0073]; tables 1-1, 1-2 | 1-6 |
| A | JP 2007-103075 A (Nippon Mining & Metals Co., Ltd.), 19 April 2007 (19.04.2007), claims 1 to 3; paragraphs [0016], [0023], [0025] (Family: none) | 1-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 21 August 2015 (21.08.15) | Date of mailing of the international search report 01 September 2015 (01.09.15) |
|---|---|
| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (July 2009)

**INTERNATIONAL SEARCH REPORT**

International application No.

PCT/JP2015/065793

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-108490 A (Kobe Steel, Ltd.), 08 May 2008 (08.05.2008), paragraphs [0049], [0064] (Family: none) | 1-6 |
| A | JP 2005-302713 A (JFE Steel Corp.), 27 October 2005 (27.10.2005), paragraphs [0096], [0099] & EP 1726674 A1 paragraphs [0118], [0119], [0123], [0124] | 1-6 |
| A | JP 2010-238577 A (Nippon Mining & Metals Co., Ltd.), 21 October 2010 (21.10.2010), claim 1; paragraphs [0015], [0044] (Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003105523 A
- JP 2006190643 A
- JP 4032068 B
- JP 4367062 B
- JP H11162479 A
- JP 2008108490 A

**Non-patent literature cited in the description**

- *TITANIUM JAPAN,* vol. 54 (4), 259